# DEMANDE DE BREVET EUROPEEN

(11) **EP 0 918 242 A1**
(43) Date de publication de la demande: **26.05.1999**
(21) Numéro de dépôt: 97118569.9
(22) Date de dépôt: 24.10.1997
(51) Int. Cl.: G02B 27/22

(54) **Dispositif de vision stéréoscopique d'images**

(71) Demandeur: Humair, Bruno, 2340 Le Noirmont (CH)
(72) Inventeur: Humair, Bruno, 2340 Le Noirmont (CH)
(74) Mandataire: Ravenel, Thierry Gérard Louis

(57) **Abrégé**

L'invention concerne un dispositif de vision stéréoscopique d'images, comprenant deux images stéréoscopiques respectivement gauche et droite, disposées l'une par rapport l'autre dans deux plans sécants, les deux images étant disposées pour que l'image de l'une dans un miroir se superpose sensiblement à l'autre, un premier filtre à polarisation linéaire, disposé devant l'image gauche et un deuxième filtre à polarisation linéaire, disposé devant l'image droite et polarisant celle-ci dans un deuxième plan perpendiculaire au premier, des moyens optiques pour former une image virtuelle réfléchie de l'une des images sur l'autre, visible par un observateur, et un troisième et un quatrième filtres à polarisation linéaire disposés respectivement devant l'oeil gauche et l'oeil droit de l'observateur, les troisième et quatrième filtres polarisant les images respectivement dans le même sens que les premier et deuxième filtres.

## Description

La présente invention concerne un dispositif de vision stéréoscopique d'images fixes ou animées.

La stéréoscopie est un procédé bien connu qui permet de donner une sensation de la profondeur et du relief à des images a deux dimensions, par l'observation de deux images dites "stéréoscopiques", c'est-à-dire prises par deux objectifs parallèles et dont l'écartement est comparable à celui des yeux d'un observateur.

Selon une première possibilité de l'art antérieur, ces images ou photographies stéréoscopiques se présentent sous forme de diapositives et sont observées à l'aide d'une visionneuse dont chaque oculaire a un fort grossissement, afin de rendre le relief encore plus saisissant. Selon une variante, ces photographies sont tirées sur papier et observées à l'aide d'un stéréoscope ou d'une paire de lunettes sur laquelle sont montées deux loupes de grossissement égal.

Cette première possibilité présente l'inconvénient que les images visionnées sont limitées en taille.

Une deuxième possibilité de l'art antérieur utilise des filtres polarisants. Un filtre polarisant possède un plan de polarisation dans une direction privilégiée. Lorsque l'on superpose deux filtres polarisants dont les plans de polarisation sont perpendiculaires, la lumière ne passe pas et l'on observe une image noire. Au contraire, lorsque l'on superpose deux filtres polarisants dont les plans de polarisation sont parallèles, la lumière passe, légèrement atténuée.

Cette propriété est utilisée pour projeter des diapositives ou des films stéréoscopiques sur un écran. Dans ce cas, on utilise deux projecteurs disposés en parallèle, chacun d'entre eux étant équipé d'un filtre polarisant dont le plan de polarisation est perpendiculaire à celui de l'autre filtre. De même, le spectateur doit porter une paire de lunettes dont chaque optique est constituée respectivement par un filtre polarisant dont le plan de polarisation est également perpendiculaire à celui de l'autre filtre. Ainsi, l'image de gauche apparaît noire pour l'oeil droit du spectateur et inversement. En d'autres termes chaque oeil ne voit que la vue qui lui est destinée et le spectateur a l'impression de relief.

Cette deuxième technique, si elle permet de voir des images de grandes dimensions, présente l'inconvénient d'être limitée aux images projetées. Cette technique n'est donc pas adaptée à la visualisation d'images stéréoscopiques produites par un écran d'ordinateur ou de télévision ou encore à la visualisation d'images tirées sur support papier.

Il a également déjà été proposé une technique d'affichage d'images stéréoscopiques produites par un écran d'ordinateur. Selon cette technique, on envoie une ligne de l'image sur un oeil et la ligne suivante sur l'autre oeil et ainsi de suite afin d'obtenir une image distincte pour chaque oeil. L'observateur porte une paire de lunettes spéciale reliée galvaniquement ou électromagnétiquement à l'ordinateur, les optiques de ces lunettes étant commandées pour ne laisser passer vers chacun des yeux de l'observateur que la partie de l'image qui lui est destinée. Cette technique présente toutefois l'inconvénient de fatiguer rapidement le cerveau de l'observateur.

Le but de l'invention est de résoudre les problèmes précités en fournissant des moyens permettant l'observation d'images stéréoscopiques de grandes dimensions avec une bonne qualité de restitution quels que soient les moyens de production des images stéréoscopiques à visualiser et de façon confortable pour l'observateur.

Ce but est atteint à l'aide d'un dispositif. de vision stéréoscopique d'images, caractérisé en ce qu'il comprend deux images stéréoscopiques respectivement gauche et droite, disposées l'une par rapport l'autre dans deux plans sécants, les deux images étant en outre disposées de façon que l'image de l'une dans un miroir se superpose sensiblement à l'autre, un premier filtre à polarisation linéaire, disposé devant l'image stéréoscopique gauche et polarisant ladite image dans un premier plan et un deuxième filtre à polarisation linéaire, disposé devant l'image stéréoscopique droite et polarisant celle-ci dans un deuxième plan perpendiculaire au premier, des moyens optiques pour former une image virtuelle ou réfléchie de l'une des images sur l'autre visible par un observateur et un troisième et un quatrième filtres à polarisation linéaire disposés respectivement devant l'oeil gauche et l'oeil droit de l'observateur, le troisième filtre et le quatrième filtre polarisant les images stéréoscopiques respectivement dans le même sens que le premier filtre et le deuxième filtre.

Grâce au dispositif de l'invention, on donne une sensation de relief à des images à deux dimensions par superposition de deux images stéréoscopiques dont la grandeur n'est limitée que par la taille des images stéréoscopiques et des filtres qui se trouvent devant celles-ci.

Par ailleurs, tout type d'images stéréoscopiques peut être visualisé, et chaque oeil reçoit une image entière et non une fraction d'image comme cela est le cas dans l'art antérieur éliminant ainsi les problèmes de fatigue de l'observateur.

Ces caractéristiques permettent également d'obtenir une qualité de restitution des images qui ne dépend que de la qualité des images elles-mêmes.

Selon un mode de réalisation avantageux de l'invention, les moyens optiques comprennent un miroir semi-transparent, disposé entre les deux images stéréoscopiques, de façon que sa face transparente aux rayons lumineux soit disposée en regard de l'une des images stéréoscopiques et laisse passer cette image en direction de l'observateur et que sa face opposée, disposée en regard de l'autre image stéréoscopique, réfléchisse cette autre image également dans ladite direction de l'observateur,

De façon avantageuse, le troisième filtre et le quatrième filtre à polarisation linéaire sont disposés alternativement sous forme de bandes successives sur la surface d'une plaque de verre ou entre deux plaques de verre. Cette disposition s'applique particulièrement au cas où le dispositif est présenté dans la vitrine d'un magasin.

Ce dispositif peut ainsi être utilisé dans une vitrine où la présentation de la photo publicitaire d'un produit, en couleurs et en trois dimensions, est un atout considérable pour attirer la clientèle. Ce dispositif peut également être utilisé dans la vitrine d'une bijouterie ou d'une horlogerie où l'agrandissement d'une photographie permet de présenter en relief, les détails d'un produit ou dans un musée pour les mêmes raisons.

De préférence, le miroir semi-transparent fait un angle de 45° avec chaque image stéréoscopique.

Ainsi, l'image observée n'est pas déformée. Toutefois, afin de réaliser un effet esthétique, il est possible de positionner le miroir selon un angle différent pour obtenir une déformation de l'image observée.

Les images stéréoscopiques sont par exemple, des photographies tirées sur papier ou digitalisées, des panneaux publicitaires lumineux ou des images provenant d'un écran de télévision ou d'un moniteur d'ordinateur, telles que des images de jeux vidéo, de jeux d'arcades, de CD ROM, des images de synthèse, des films vidéo ou digitalisés On notera que l'usage de photos digitalisées permet une grande souplesse de stockage et que la réalisation de suites d'images permet de faire une animation en 3 dimensions.

L'invention sera mieux comprise à la lecture de la description suivante d'un de ses modes de réalisation, donné à titre d'exemple illustratif et non limitatif, cette description étant faite en faisant référence aux dessins joints dans lesquels :
- la figure 1 est une vue en coupe d'un dispositif stéréoscopique selon l'invention,
- la figure 2 est un schéma en perspective illustrant le dispositif selon l'invention,
- les figures 3 et 5 sont des vues en coupe d'autres variantes de réalisation d'un dispositif stéréoscopique selon l'invention, et
- la figure 4 est une vue en coupe du dispositif des figures 3 et 5.

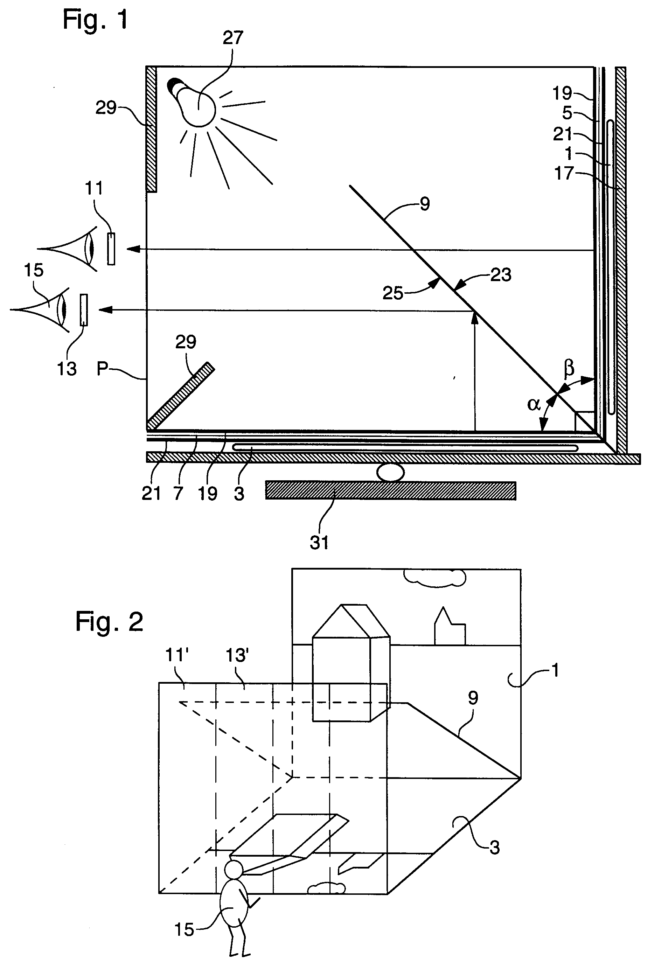

En se référant à la figure 1, on peut voir que le dispositif selon l'invention comprend d'une manière générale, deux images stéréoscopiques gauche 1 et droite 3, disposées à 90° l'une de l'autre, un premier et un deuxième filtres à polarisation linéaire, référencés 5 et 7 et disposés respectivement devant chacune des images 1, 3 et des moyens optiques 9 permettant de former une image virtuelle ou réfléchie de l'image 3 sur l'image 1. Dans l'exemple représenté, les moyens optiques comprennent un miroir semi-transparent disposé entre lesdites deux images. En outre, un troisième et un quatrième filtres à polarisation linéaire 11, 13 sont disposés devant les yeux d'un observateur 15.

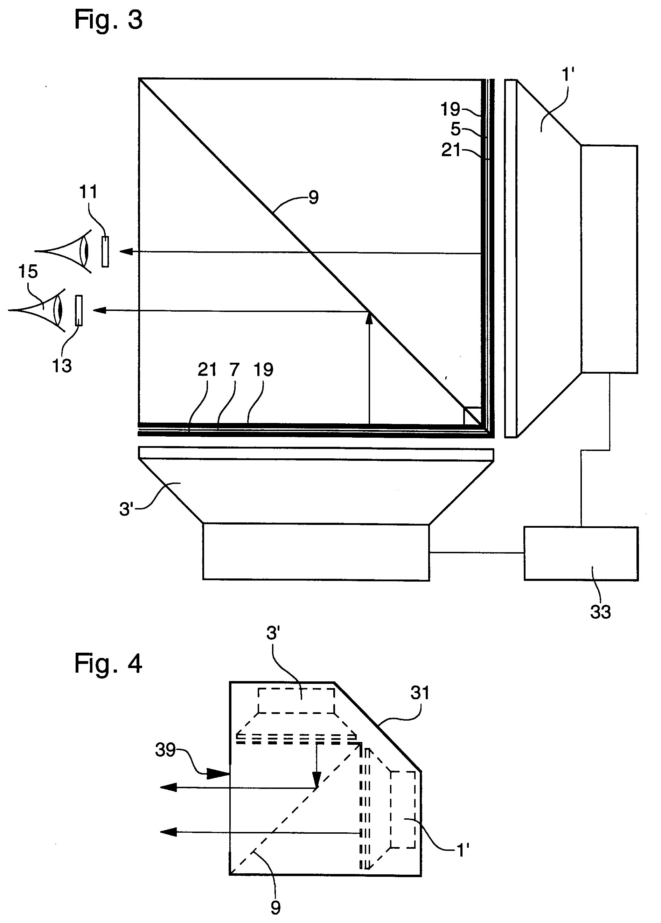

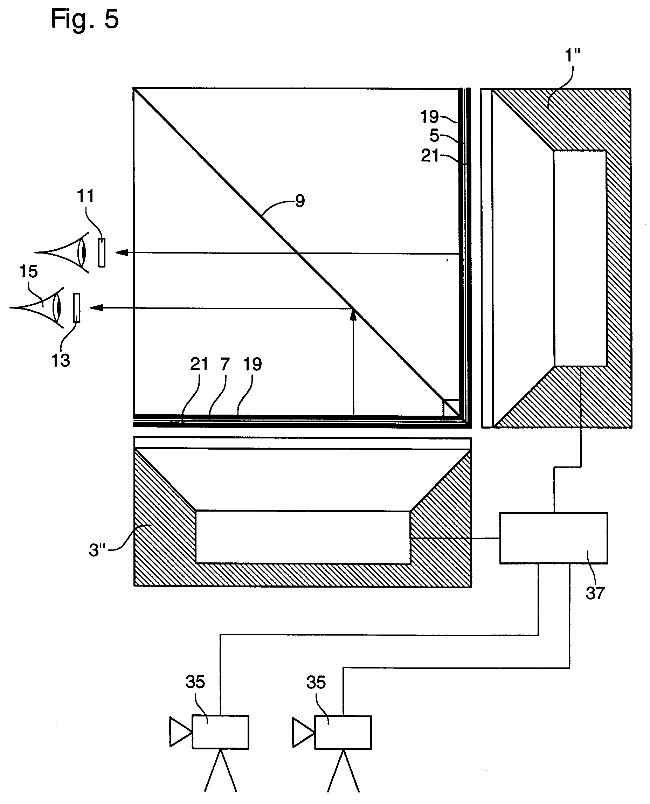

Plus précisément, les deux images stéréoscopiques 1, 3 sont fixées sur un support 17 à angle droit. Dans le mode de réalisation illustré en figure 1, ces images sont des photographies, elles pourraient toutefois être remplacées par des panneaux publicitaires lumineux ou par des moniteurs d'ordinateurs comme illustré en figure 3 ou par des postes de télévision comme illustré en figure 5.

Les deux images stéréoscopiques 1 et 3 sont disposées l'une par rapport à l'autre dans deux plans sécants comme illustré en figure 2, pour des raisons qui seront détaillées ultérieurement. Les images stéréoscopiques 1 et 3 de la figure 2 représentent dans ce cas un paysage avec le ciel et la terre, une maison, une église et un nuage. Ces deux images étant stéréoscopiques, on peut constater que sur l'image 3, l'église et le nuage sont plus proches du bord que sur l'image 1.

L'image stéréoscopique 3 présente sa face recto et l'image stéréoscopique 1 sa face verso. En d'autres termes, lors du tirage photographique, le négatif de l'image stéréoscopique 3 est développé sur la face opposée à celle sur laquelle le négatif de l'image 1 est développé. Par ailleurs, par rapport à l'observateur 15, l'image stéréoscopique 1 du fond est disposée verticalement et l'image stéréoscopique 3 du bas est disposée de façon que son image dans un miroir se superpose sensiblement à l'image 1, c'est-à-dire dans le cas présent que le haut de l'image (le ciel) soit dirigé vers l'observateur 15 et que le bas de l'image (la terre) soit dirigé vers le fond du dispositif.

Comme illustré en figure 1, chaque filtre à polarisation linéaire souple 5, 7 est maintenu entre deux plaques d'un matériau transparent, par exemple en verre, 19, 21 formant un support rigide.

Selon une variante de réalisation non représentée sur les figures, les filtres 5, 7 de polarisation peuvent faire partie intégrante d'une plaque en un matériau transparent, par exemple en verre, qui remplace alors l'assemblage en sandwich. Le premier filtre 5 polarise la lumière dans un plan et le deuxième filtre 7 polarise la lumière dans un deuxième plan perpendiculaire à celui du premier filtre 5.

Le miroir semi-transparent 9 présente une face 23 transparente aux rayons lumineux, disposée en regard de l'image stéréoscopique 1 du fond et une face 25 réfléchissant les rayons lumineux, disposée en regard de l'image stéréoscopique 3 du bas.

De préférence, le miroir 9 est disposé de façon à former un angle α,β de 45° avec chacune des images stéréoscopiques 1, 3. Ceci permet à l'observateur 15 d'avoir une image non déformee.

Dans le mode de réalisation illustré en figure 1, le troisième et le quatrième filtres polarisants 11, 13 constituent chacun respectivement l'optique d'une paire de lunettes portée par l'observateur 15. Par ailleurs, le troisième filtre 11 et le quatrième filtre 13 polarisent la lumière respectivement dans le même plan que les filtres 5 et 7. Plus précisément, si par exemple, l'image stéréoscopique de gauche 1 est l'image de fond, il faut que le filtre à polarisation linéaire 5, placé devant, ait le même plan de polarisation que le filtre 11 placé devant l'oeil gauche de l'observateur 15. Inversement, pour l'image stéréoscopique de droite 3, les filtres 7 et 13 ont le même plan de polarisation, perpendiculaire à celui des filtres 5 et 11.

On notera que dans le mode de réalisation illustré en figure 1, une paroi de protection P est prévue entre les filtres 11 et 13 et le miroir semi-transparent 9.

Selon une autre variante de réalisation, illustrée en figure 2, le dispositif selon l'invention peut être placé dans une vitrine. Dans ce cas, le troisième et le quatrième filtres polarisants se présentent sous forme de bandes verticales 11' et 13' successives, disposées alternativement sur la vitrine. Dans ce cas, comme pour le premier filtre 5 et le deuxième filtre 7, les filtres 11' et 13' peuvent être maintenus entre deux plaques de verre ou analogue formant support ou faire partie intégrante d'une plaque de verre. Cette variante permet d'éviter le port de lunettes.

Par ailleurs, comme illustré en figure 1, lorsque les images stéréoscopiques 1, 3 sont des photographies, il est possible de prévoir une source lumineuse 27 pour les éclairer.

Le dispositif selon l'invention peut également prévoir au moins un cache 29 et de préférence deux, évitant la vision directe des images stéréoscopiques 1, 3 par l'observateur 15. Ces caches sont avantageusement orientables.

Enfin, il est également possible de placer le dispositif de vision stéréoscopique sur un socle 31 orientable dans l'espace afin d'incliner au mieux le dispositif vers l'observateur 15.

La figure 3 illustre le cas où les images stéréoscopiques sont remplacées par des moniteurs d'ordinateurs 1' et 3' pilotés par un ordinateur 33.

La figure 5 illustre le cas où les images stéréoscopiques sont remplacées par des écrans de télévision 1'' et 3'' reliés à des caméras 35, éventuellement via un dispositif 37 de mise en forme stéréoscopique des images. On notera que dans ce mode de réalisation les images stéréoscopiques provenant de caméras 35 permettent d'obtenir des images en temps réel en trois dimensions avec tous les avantages offerts par les caméras (agrandissement) qui sont très appréciés pour mettre en valeur les détails du mouvement d'un produit filmé.

Enfin, la figure 4 illustre un exemple de réalisation du socle orientable 31 lorsque les images stéréoscopiques sont des moniteurs d'ordinateur ou des postes de télévision, ce socle présentant une vitre 39 de maintien des filtres polarisants.

Des exemples de réalisation de l'invention ont été décrits ci-dessus en faisant référence aux figures jointes, toutefois, n'importe quel type d'image stéréoscopique (photographie, panneau publicitaire etc.) peut être combiné avec n'importe quel type de filtres à polarisation linéaire (directement sur un support ou pris en sandwich entre deux) et les images peuvent être observées indifféremment avec des lunettes ou à travers une vitrine ou paroi vitreuse. Enfin, dans la représentation de la figure 1, l'image stéréoscopique pourrait être disposée en haut et le miroir 9 s'étendrait alors depuis le haut à droite vers le bas à gauche du dessin comme cela est représenté à la figure 4.

Le fonctionnement du dispositif va maintenant être décrit en faisant référence aux figures 1 et 2. L'image en trois dimensions est obtenue par la superposition des deux images stéréoscopiques. L'image stéréoscopique gauche 1 polarisée au travers du filtre 5 est envoyée à travers le miroir 9 vers un oeil polarisé par le filtre 11, tandis que l'image stéréoscopique droite 3 polarisée au travers du filtre 7 est réfléchie par le miroir 9 vers l'autre oeil polarisé par le filtre 13.

## Revendications

1. Dispositif de vision stéréoscopique d'images, caractérisé en ce qu'il comprend deux images stéréoscopiques respectivement gauche (1, 1', 1'') et droite (3, 3', 3''), disposées l'une par rapport l'autre dans deux plans sécants, les deux images étant en outre disposées de façon que l'image de l'une dans un miroir se superpose sensiblement à l'autre, un premier filtre à polarisation linéaire (5), disposé devant l'image stéréoscopique gauche (1, 1', 1'') et polarisant ladite image dans un premier plan et un deuxième filtre à polarisation linéaire (7), disposé devant l'image stéréoscopique droite (3, 3', 3'') et polarisant celle-ci dans un deuxième plan perpendiculaire au premier, des moyens optiques (9) pour former une image virtuelle réfléchie de l'une des images sur l'autre visible par un observateur, et un troisième et un quatrième filtres à polarisation linéaire (11, 13) disposés respectivement devant l'oeil gauche et l'oeil droit de l'observateur (15), le troisième filtre (11) et le quatrième filtre (13) polarisant les images stéréoscopiques respectivement dans le même sens que le premier filtre (5) et le deuxième filtre (7).

2. Dispositif de vision stéréoscopique selon la revendication 1, caractérisé en ce que lesdits moyens optiques comprennent un miroir semi-transparent (9), disposé entre les deux images stéréoscopiques, de façon que sa face (23) transparente aux rayons lumineux soit disposée en regard de l'une des images stéréoscopiques et laisse passer cette image en direction de l'observateur et que sa face opposée (25), disposée en regard de l'autre image stéréoscopique, réfléchisse cette autre image également dans la direction de l'observateur.

3. Dispositif de vision stéréoscopique selon la revendication 2, caractérisé en ce que 1e miroir semi-transparent (9) fait un angle de 45° avec chaque image stéréoscopique.

4. Dispositif de vision stéréoscopique selon l'une des revendications 1 à 3, caractérisé en ce que le troisième filtre (11) et le quatrième filtre (13) à polarisation linéaire constituent chacun respectivement l'optique d'une paire de lunettes portée par l'observateur (15).

5. Dispositif de vision stéréoscopique selon la revendication 1, caractérisé en ce qu'au moins l'un des quatre filtres à polarisation linéaire (5, 7, 11, 13) est maintenu par deux plaques en matériau transparent (19, 21) disposées de part et d'autre dudit filtre.

6. Dispositif de vision stéréoscopique selon la revendication 1, caractérisé en ce qu'au moins l'un des quatre filtres à polarisation linéaire (5, 7, 11, 13) fait partie intégrante d'une plaque en matériau transparent.

7. Dispositif de vision stéréoscopique selon la revendication 5 ou 6, caractérisé en ce que le troisième filtre et le quatrième filtre à polarisation linéaire (11, 13) sont disposés alternativement sous forme de bandes successives.

8. Dispositif de vision stéréoscopique selon la revendication 1, caractérisé en ce que les images stéréoscopiques (1, 1', 1'', 3, 3', 3'') sont des photographies, des panneaux publicitaires lumineux ou des images provenant d'écrans de télévision ou de moniteurs d'ordinateur.

9. Dispositif de vision stéréoscopique selon la revendication 1, caractérisé en ce que lorsque les images stéréoscopiques (1, 3) sont des photographies, le dispositif présente une source lumineuse (27) éclairant lesdites photographies.

10. Dispositif de vision stéréoscopique selon la revendication 1, caractérisé en ce qu'il comprend au moins un cache (29) évitant la vision directe des images stéréoscopiques par l'observateur.

11. Dispositif de vision stéréoscopique selon la revendication 1, caractérisé en ce qu'il est placé sur un socle (31) orientable dans l'espace.
